# EUROPEAN PATENT SPECIFICATION

(11) **EP 3 540 501 B1**
(45) Date of publication and mention of the grant of the patent: **07.04.2021**
(21) Application number: 19159368.0
(22) Date of filing: 26.02.2019
(51) Int. Cl.: G02F 1/11, G06N 10/00

(54) **MULTI-CHANNEL LASER SYSTEM INCLUDING AN ACOUSTO-OPTIC MODULATOR (AOM) WITH BEAM STABILIZER AND RELATED METHODS**
MEHRKANALIGES LASERSYSTEM MIT EINEM AKUSTO-OPTISCHEN MODULATOR (AOM) MIT STRAHLSTABILISATOR UND ZUGEHÖRIGE VERFAHREN
SYSTÈME LASER MULTICANAL COMPRENANT UN MODULATEUR ACOUSTO-OPTIQUE (AOM) COMPORTANT UN STABILISATEUR DE FAISCEAU ET PROCÉDÉS ASSOCIÉS

(30) Priority: 12.03.2018 US 201815918184
(43) Date of publication of application: 18.09.2019
(73) Proprietor: Harris Corporation, Melbourne, Florida 32919 (US)
(72) Inventor: Morse, Randall K., Palm Bay,, FL Florida FL 32907 (US); Wasilousky, Peter Alan, Indialantic,, FL Florida Florida 32903 (US); Burberry, Lee M., West Melbourne, FL Florida FL 32904 (US); Lange, Michael R., Melbourne,, FL Florida FL 32934 (US); Logan, Catheryn D., Melbourne,, FL Florida 32935 (US); COREY, Christopher A., Palm Bay, FL Florida 32907 (US)
(74) Representative: Schmidt, Steffen J.

(56) References cited:
- EP-A1- 3 319 017
- US-A- 5 689 331
- US-A1- 2008 247 031
- S. DEBNATH ET AL: "Demonstration of a small programmable quantum computer with atomic qubits", NATURE, vol. 536, no. 7614, 4 August 2016 (2016-08-04), pages 63-66, XP055552682, London ISSN: 0028-0836, DOI: 10.1038/nature18648
- H. C Nägerl ET AL: "Laser addressing of individual ions in a linear ion trap", Physical Review A, 1 July 1999 (1999-07-01), pages 145-148, XP055461461, DOI: 10.1103/PhysRevA.60.145 Retrieved from the Internet: URL:https://quantumoptics.at/images/public ations/papers/pra99_adressing.pdf

## Description

### Related Applications

This application is a continuation-in-part of application serial no. 15/342,357 filed November 3, 2016, US 2018120600.

### Technical Field

The present invention relates to the field of optical devices, and, more particularly, to acousto-optic modulators for lasers and related methods.

### Background

Acousto-optic modulators, sometimes referred to as Bragg cells, diffract and shift light using sound waves at radio frequency. These devices are often used for Q-switching, signal modulation in telecommunications systems, laser scanning and beam intensity control, frequency shifting, and wavelength filtering in spectroscopy systems. Many other applications lend themselves to using acousto-optic devices.

In such acousto-optic devices, a piezoelectric transducer, sometimes also referred to as an RF transducer, is secured to an acousto-optic bulk medium as a transparent optical material, for example, fused silica, quartz or similar glass material. An electric RF signal oscillates and drives the transducer to vibrate and create sound waves within the transparent medium which effect the properties of an optical field in the medium via the photo elastic effect, in which a modulating strain field of an ultrasonic wave is coupled to an index of refraction for the acousto-optic bulk medium. As a result, the refractive index change in amplitude is proportional to that of sound.

The index of refraction is changed by moving periodic planes of expansion and compression in the acousto-optic bulk material. Incoming light scatters because of the resulting periodic index modulation and interference, similar to Bragg diffraction.

Acousto-optic modulators are preferred in many applications because they are faster than tiltable mirrors and other mechanical devices. The time it takes for the acousto-optic modulator to shift an exiting optical beam is limited to the transit time of the sound wave. The acousto-optic modulators are often used in Q-switches where a laser produces a pulsed output beam at high peak power, typically in the Kilowatt range. This output could be higher than lasers operating a continuous wave (CW) or constant output mode.

Examples of acousto-optic modulator devices and similar acousto-optic systems are disclosed in commonly assigned U.S. Pat. Nos. 4,256,362; 5,923,460; 6,320,989; 6,487,324; 6,538,690; 6,765,709; and 6,870,658,

Some applications using acousto-optic devices modulate the intensity of an optical beam. This modulation may create small deviations in the output angle of the diffracted beam because of the local thermal transients introduced when the RF modulation waveform to the device is turned ON and OFF. These thermal transients may negatively impact the resolution and location of the focused spot, which may be produced. One advantageous approach which may be used to help enhance the resolution of acousto-optic devices is set forth in U.S. Pat. No. 7,538,929 to Wasilousky, which is assigned to the present Applicant. Wasilousky discloses an acousto-optic modulator which includes an acousto-optic bulk medium and transducer attached to the acousto-optic bulk medium and formed as a linear array of electrodes. A transducer driver is connected to each electrode and is coherently phase driven to alter the angular momentum distribution of an acoustic field and alternately allow and inhibit phase matching between the optical and acoustic field and produce a desired intensity modulation of an optical wavefront.
A conventional laser system is disclosed by S. DEBNATH ET AL: "Demonstration of a small programmable quantum computer with atomic qubits", NATURE, vol. 536, no. 7614, 4 August 2016 (2016-08-04), pages 63-66. Therein, a laser system comprises a laser source configured to generate a laser light beam; an ion trap; a multi-channel acousto-optic modulator (AOM) to split the laser light beam into a plurality of front side laser light beams from, a common acousto-optic medium configured to receive the plurality of front side laser light beams, and a respective plurality of electrodes coupled to the common acousto-optic medium for each of the front side laser light beams. A plurality of radio frequency (RF) drivers are each configured to generate respective RF drive signals for each of the plurality of electrodes.

Despite the existence of such configurations, further advancements in laser systems using acousto-optic modulators may be desirable in certain applications.

### Summary

A laser system according to the invention is defined in claim 1.

More particularly, the beam stabilizer may be configured to correct a positional displacement of the laser light beam. By way of example, the beam stabilizer may include a position mirror optically aligned with the laser light beam from the laser source, a servo motor configured to move the position mirror, a position sensor configured to measure a positional displacement of the laser light beam, and a servo controller coupled to the servo motor and configured to actuate the servo motor to stabilize the laser light beam based upon the position sensor.

In accordance with another example aspect, the system may further include a single channel amplitude leveling AOM coupled between the laser source and the first beamsplitter, and the beam stabilizer may include a position mirror optically aligned with an output light beam from the single channel amplitude leveling AOM, a servo motor configured to move the position mirror, a position sensor configured to measure a positional displacement of the output light beam, and a servo controller coupled to the servo motor and configured to actuate the servo motor to stabilize the output light beam based upon the position sensor.

The beam stabilizer may also be configured to correct an angular displacement of the laser light beam. In one example implementation, the beam stabilizer may include an angle mirror optically aligned with the laser light beam from the laser source, a servo motor configured to move the angle mirror, an angle sensor configured to measure an angular displacement of the laser light beam, and a servo controller coupled to the servo motor and configured to actuate the servo motor to stabilize the laser light beam based upon the angle sensor.

In accordance with another example implementation, the system may further include a single channel amplitude leveling AOM coupled between the laser source and the first beamsplitter, and beam stabilizer may include an angle mirror optically aligned with an output light beam from the single channel amplitude leveling AOM, a servo motor configured to move the angle mirror, an angle sensor configured to measure an angular displacement of the output light beam, and a servo controller coupled to the servo motor and configured to actuate the servo motor to stabilize the output light beam based upon the angle sensor.

In an example configuration, the laser system may further include at least one turning mirror to direct the back side laser light beam from the first beamsplitter to the back side of the workpiece. Furthermore, the electrodes map comprise phased array transducer electrodes, and each RF driver may be configured to drive alternating electrodes of the respective phased array transducer electrodes with different phases.

A related method may include generating a laser light beam using a laser source, stabilizing the laser light beam using a beam stabilizer downstream from the laser source, splitting the laser light beam using a first beamsplitter into a first front side laser light beam and a back side laser light beam for a back side of an ion trap, directing the front side laser light beam to a second beamsplitter using an input telescope, and splitting the first front side laser light beam using the second beamsplitter into a plurality of second front side laser light beams from the second beamsplitter. The method may further include receiving the plurality of front side laser light beams at a common acousto-optic medium, generating respective RF drive signals for each of a respective plurality of electrodes coupled to the common acousto-optic medium for each of the second front side laser light beams using a plurality of RF drivers, and directing the plurality of second front side laser light beams to a front side of the ion trap using an output telescope.

Another example method may include generating a laser light beam using a laser source, modulating the laser light beam from the laser source using a single channel amplitude leveling AOM to provide an output light beam, stabilizing the output light beam using beam stabilizer downstream from the single channel AOM, splitting the output light beam using a first beamsplitter into a first front side laser light beam and a back side laser light beam for a back side of an ion trap, directing the front side laser light beam to a second beamsplitter using an input telescope, and splitting the first front side laser light beam using the second beamsplitter into a plurality of second front side laser light beams from the second beamsplitter. The method may further include receiving the plurality of front side laser light beams at a common acousto-optic medium, generating respective RF drive signals for each of a respective plurality of electrodes coupled to the common acousto-optic medium for each of the second front side laser light beams using a plurality of RF drivers; and directing the plurality of second front side laser light beams to a front side of the ion trap using an output telescope.

### Brief Description of the Drawings

FIG. 1 is a schematic block diagram of a laser system including a multi-channel acousto-optic modulator (AOM) in accordance with an example embodiment.
FIG. 2 is a schematic block diagram of a laser system for use with an ion trap including a multi-channel AOM in accordance with an example embodiment.
FIGS. 3 and 4 are schematic circuit diagrams illustrating different electrode connection configurations and associated driving signals therefor which may be used with the systems of FIGS. 1-2.
FIGS. 5-6 are flow diagrams illustrating method aspects associated with the systems of FIGS. 1-2, respectively.
FIG. 7 is a schematic block diagram of another example embodiment of the laser system of FIG. 1 including a beam stabilizer.
FIGS. 8-10 are schematic block diagrams of example embodiments of the laser system of FIG. 2 including beam stabilizers.
FIG. 11 is a flow diagram illustrating method aspects associated with the laser system of FIG. 7.
FIG. 12 is a flow diagram illustrating method aspects associated with the laser systems of FIGS. 8-9.
FIG. 13 is a flow diagram illustrating method aspects associated with the laser system of FIGS. 10.

### Detailed Description of the Embodiments

The present description is made with reference to the accompanying drawings, in which exemplary embodiments are shown. However, many different embodiments may be used, and thus the description should not be construed as limited to the particular embodiments set forth herein. Rather, these embodiments are provided so that this disclosure will be thorough and complete. Like numbers refer to like elements throughout, and prime notation and multiple prime notation are used to indicate similar elements in different embodiments.

By way of background, excessive noise levels from laser sources in optical illumination systems generate instabilities and errors. In particular, systems that manipulate the quantum states of particles, atoms and electrons, typically require extreme stability. Beam pointing errors correlate to noise in quantum state manipulation systems. Moreover, beam pointing stability due to thermal transients in the bulk material of active acousto-optic devices in an optical illumination system affect many applications, but especially those designed for quantum state illumination.

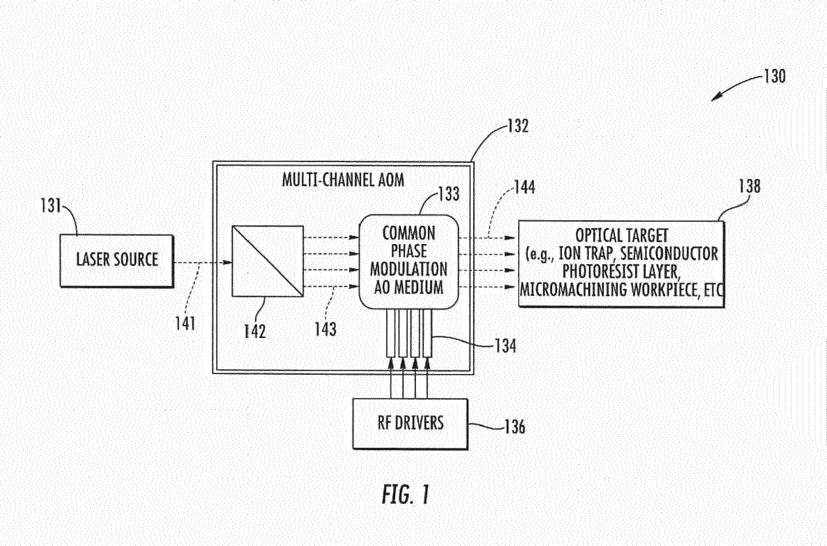

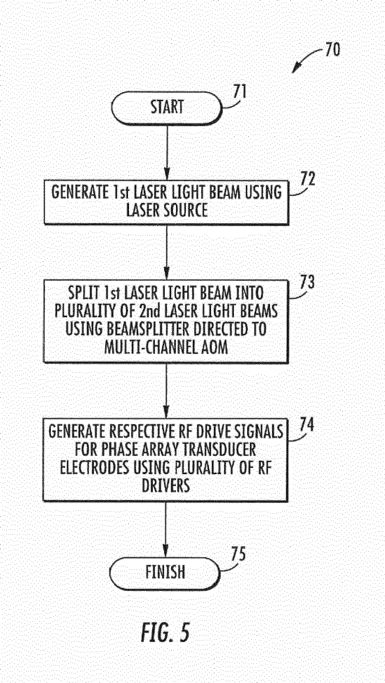

Turning initially to FIG. 1 and the flow diagram **70** of FIG. 5, a laser system **130** which provides multi-channel operation and associated method aspects are now described. By way of background, typical multi-channel acousto-optic (AO) devices suffer from excessive beam pointing errors due to data dependent thermal transients generated in the ultrasonic transducer and bulk optical substrate material. Moreover, beam pointing errors correlate to noise in quantum state manipulation systems. In addition, inter-channel acoustic crosstalk is a major source of data dependent variation in the modulated optical beam intensity.

Current passive approaches may minimize the magnitude of beam deflection due to thermal transients generated when channel data is switched on and off (i.e., no auxiliary heating electrodes). This reduces the magnitude of the time average thermal gradients produced by the aggregate array during normal operation, leading to reductions in polarization corruption and gross beam offset. In addition, it does not address beam intensity fluctuations produced by inter-channel acoustic strain field interaction.

Beginning at Block **71,** the multi-channel system **130** illustratively includes a laser source **131** which generates a first laser light beam **141,** at Block **72.** The laser source **131** may be similar to the laser source **31** described above. A diffractive/refractive beam splitter **142** divides the first laser light beam **141** into a plurality of second laser light beams **143,** at Block **73,** which in the illustrated example is four, although other numbers of beams (e.g., 8, 32, etc.) may be used depending upon the given application. The second laser light beams **143** are received by a common phase modulation acousto-optic medium **133** of a multi-channel AOM **132.** That is, the acousto-optic medium **133** is common to all of the second laser light beams, i.e., the same acousto-optic medium is used to modulate each of the second laser light beams. The acousto-optic medium **133** may be similar to those described above. However, it should be noted that the phase-capable multi-channel AOM **132** need not be used, and that an amplitude modulation AOM may instead by used, for example.

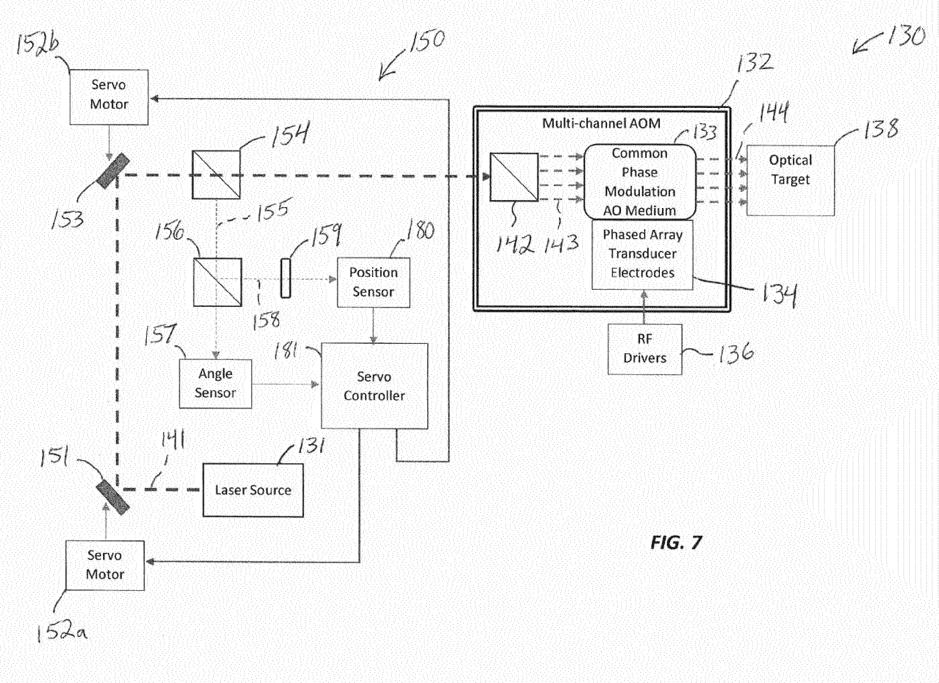

The AOM **132** further includes multiple transducers, each comprising respective electrodes **134,** for each of the second laser light beams **143** coupled to the common acousto-optic medium **133.** The laser system **130** further illustratively includes a plurality of RF drivers **136** each configured to generate the requisite RF drive signals for their respective phased array transducer electrodes **134,** at Block **74,** which illustratively concludes the method of FIG. 7 (Block **75**).

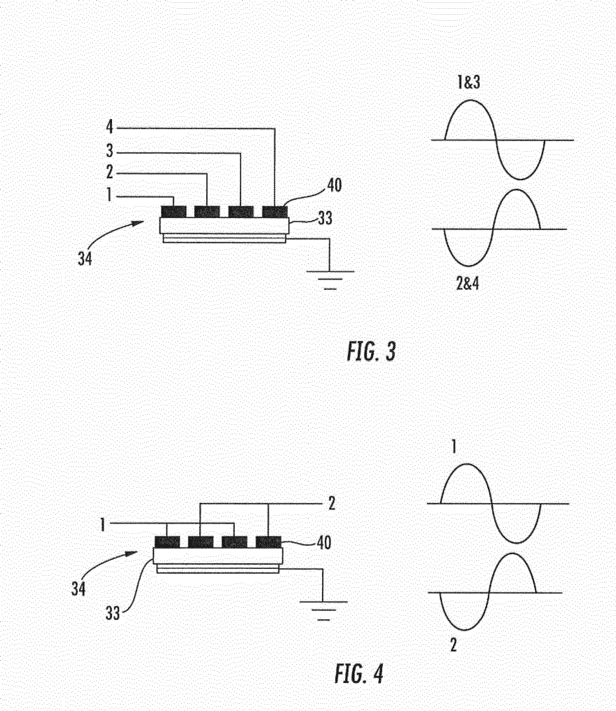

Referring additionally to FIGS. 3 and 4, each RF driver **136** may be configured to drive alternating electrodes of the respective array of transducer electrodes **134** with different phases. More particularly, two example configurations for driving alternating electrodes **40** of the array of transducer electrodes **34** with different phases are now described. In the first configuration (FIG. 3), the first and third driving signals (shown on the right hand side of FIG. 3) provided to corresponding odd numbered electrodes are 180º out of phase with the second and fourth driving signals provided to corresponding even numbered electrodes. In the second configuration (FIG. 4), first and second drive signals are respectively connected to odd and even electrodes in an interdigitated fashion as shown, and as before these drive signals are 180º out of phase to one another. In this way, directly adjacent electrodes are driven at opposite phases to one another. However, it should be noted that the RF drive signals need not always be 180° out of phase, i.e., they may be somewhere between 0º and 180º to vary the level of phase matching occurring in the AO diffraction process.

Such a bi-phase configuration helps to eliminate beam deflection due to thermal transients generated when channel data is switched on and off, i.e., by using phase modulation only. More particularly, a bi-phase approach maintains the RF Signal "ON" and only flips the phase of the drive signal to alternating elements, as opposed to a conventional amplitude modulation approach in which optical modulation is achieved by turning the RF signal "ON" and "OFF".

The present approach may accordingly reduce time average thermal gradients produced by the aggregate array during normal operation since the RF power level is essentially constant or stationary, which helps to minimize polarization corruption and gross beam offset. This further helps to reduce beam intensity fluctuations produced by inter-channel acoustic crosstalk by minimizing changes in the adjacent channel strain field due to changes in local channel data.

By way of example, the transducer electrodes **134** may be implemented as metalizations on the piezoelectric AO medium **133,** which are spaced apart 500 µm or less at their centers, and more particularly 450 µm or less. However, other dimensions may be used in different embodiments.

Accordingly, employing a phase modulation capable acousto-optic modulator or transducer structure in a multi-channel device configuration provides significant advantages. More particularly, phase modulation used with pulse code (ON/OFF) modulation provides inherently better pointing stability, since the RF power applied to the device remains substantially constant at all times, even during data input bit transitions. Moreover, the effects of inter-channel acoustic crosstalk are reduced since the integrated optical effect resulting from changes in the localized strain field due to adjacent transducer operation are reduced. This technique may be particularly appropriate when reduced "ON/OFF" contrast is acceptable, e.g., mask generation involving photoresist. However, in addition to a photoresist layer of a semiconductor device, other optical targets **138** may also be used with the system **130,** such as an ion trap(s), micromachining workpiece, etc.

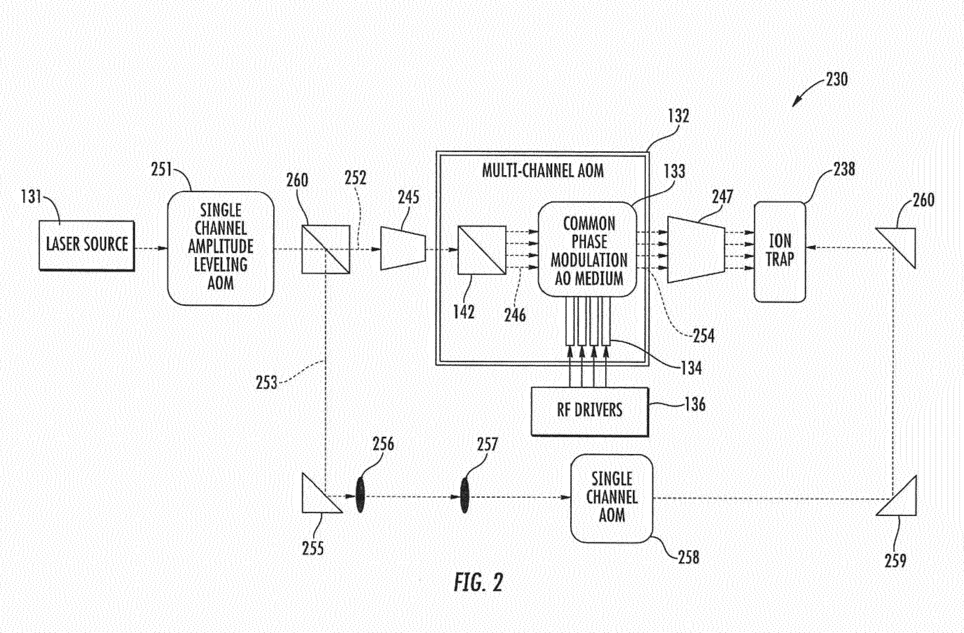

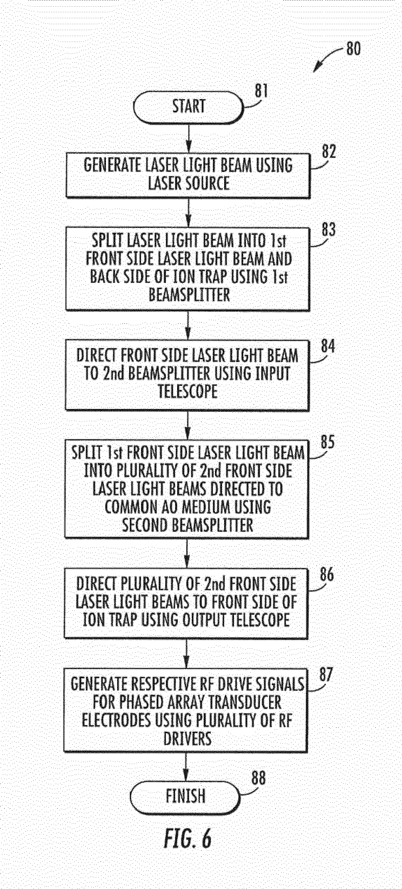

Turning now to FIG. 2 and the flow diagram **80** of FIG. 6, a multi-channel laser system **230** which may incorporate the multi-channel AOM **132** described above, or alternately an array of conventional transducers, for quantum state applications is now described. By way of background, quantum state manipulation illumination systems control both the optical amplitude and phase in an interferometric application. However, this requires significant improvements in crosstalk and beam pointing stability.

Beginning at Block **81,** the system **230** illustratively includes a laser source **231,** such as those described above, which is configured to generate a laser light beam (Block **82).** The output of the laser source **231** may optionally be provided to a single channel amplitude leveling AOM **251,** which helps reduce noise from the laser source. The output of the AOM **251** is split into a first front side laser light beam **252** and a back side laser light beam **253** for a back side of an ion trap **238** by a beamsplitter **260,** at Block **83.** The front side laser light beam **252** passes through an input telescope **245** to the multi-channel AOM **132,** at Block **84.** As noted above, the AOM **132** includes the diffractive/refractive beamsplitter **142** or diffractive optical element (DOE) to split the front side laser light beam **252** into a plurality of front side laser light beams **246,** at Block **85.** In the illustrated example, four such beams are shown, but in other embodiments different numbers of beams may be used, as noted above. Additional beam forming optics between the beamsplitter **142** and the common AO medium **133** are incorporated to allow telecentric beam positioning and adjustment of individual beam waist dimensions along the centerline and midpoint of each transducer.

The modulated front side laser light beams **254** output by the AOM **132** are passed through an output telescope **247** and directed to the front side of an ion trap **238,** at Block **86.** The back side laser light beam **253** is directed to a first turning mirror **255,** and then through first and second focusing optics **256, 257** (although different numbers of optical focusing stages may be used in different embodiments) to a single channel AOM **258.** The output of the single channel AOM **258** is directed by turning mirrors **259** and **260** to the back side of the ion trap **238** in the example implementation. Furthermore, respective RF drive signals are generated for the phased array transducer electrodes **134** using the plurality of RF drivers **136,** at Block **87,** as similarly described above, or using simplified drive signals when conventional transducers are employed. The method of FIG. 6 illustratively concludes at Block **88.**

In accordance with one example implementation, an integrated multi-channel AOM assembly **132** may be provided including a high efficiency DOE or beamsplitter **142,** a set of telecentric beam forming optics, a thermally compensated N channel AOM including the common AO medium **133** and in one embodiment transducers employing an array of phased electrodes **134,** and in certain applications, a counter propagating illumination beam. As noted above, the input beam may be split into N separate optical beams, each of which may be independently modulated in phase and amplitude, with a frequency shift on the first order diffracted beam equal to the acoustic frequency. The resultant individual beam pointing stability is not only suitable for precision photolithography tools, but also addressing applications such as illuminating atoms in an ion trap architecture quantum computer, micro-machining and 3D printing, for example.

A highly engineered integrated module approach may be used to achieve the highly uniform, stable, low cross-talk multi-channel beam illumination system needed for high precision manipulation of quantum states of individual atoms. This integrated module approach may be used at various interaction wavelengths. It should be noted that the noise diverting approach using the first order beam as a noise dump described above with respect to FIG. 1 may also be employed in the systems **130** and **230** in some embodiments, if desired.

In one or more of the foregoing embodiments, separate active heating elements may be included to help improve performance, if desired. One such configuration is set forth in U.S. Pat. No. 6,765,709 to Montgomery et al., which is assigned to the present Assignee. Furthermore, additional techniques may also be employed for noise reduction in some embodiments, such as described in the co-pending publication US 2018 120599 and US 2018 120600 both filed November 3, 2016.

Turning now to FIG. 7, another example implementation of the laser system **130** illustratively includes a beam stabilizer **150** to help address "wandering" of the laser light beam from the laser source **131.** In the present example, the beam stabilizer **150** is configured to correct an angular displacement and a positional displacement of the laser light beam **141** from the laser source **131** (although both positional and angular displacement need not be corrected in all embodiments). More particularly, the beam stabilizer **150** illustratively includes a position mirror **151** optically aligned with the laser light beam **141** from the laser source **131,** a servo motor **152a** configured to move the position mirror, an angle mirror **153** optically aligned with the position mirror to redirect the laser light beam therefrom to the multi-channel AOM **132,** and a servo motor **152b** configured to move the angle mirror.

Furthermore, a beamsplitter **154** is positioned in the optical path between the angle mirror **153** and the multi-channel AOM **132** downstream from the angle mirror and configured to split a sampled laser light beam **155** from the original laser light beam **141** from the laser source **131,** and direct this sampled laser light beam to an angle sensor **157.** Furthermore, in the illustrated example another beamsplitter **156** is positioned in the optical path of the sampled laser light beam **155** between the beamsplitter **154** and the angle sensor **157** to split off another sampled laser light beam **158** which is directed through a lens **159** to image the angle mirror **153** to a position sensor **180.** The angle sensor **157** is configured to measure an angular displacement of the laser light beam **141** from the laser source **131,** and the position sensor **180** is configured to measure a positional displacement of the laser light beam from the laser source. These measurements are provided to a servo controller **181,** which in turn controls or actuates the servo motors **152a, 152b** to correct the positional and angular displacements caused by drift or wandering of the laser light beam at the laser source **131.**

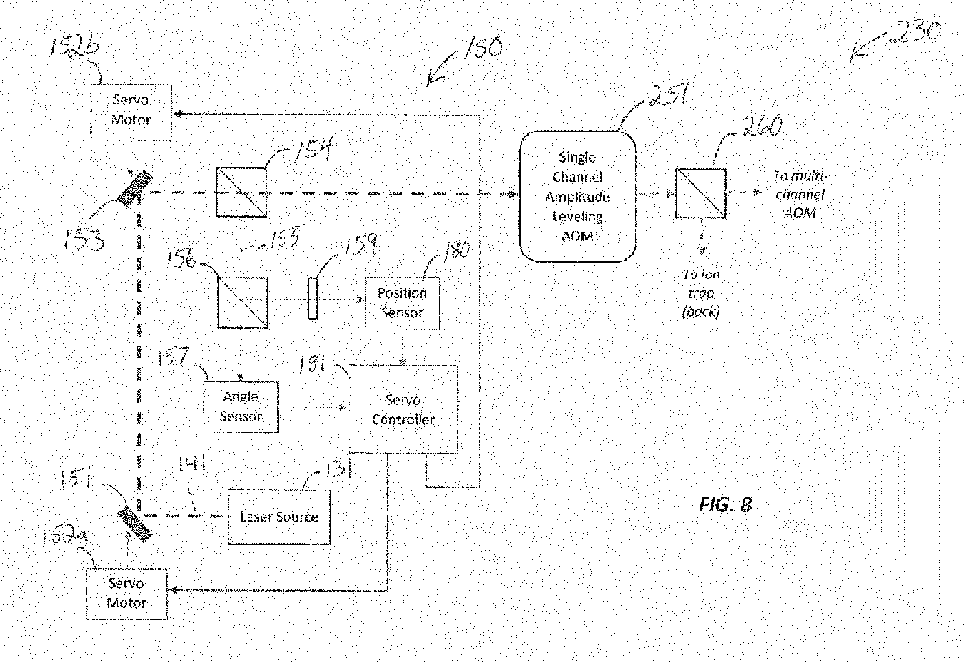

Turning now to FIG. 8, in accordance with another example embodiment the beam stabilizer **150** may also be incorporated in the laser system **230.** In this configuration, the position mirror **151** is optically aligned with the laser light beam from the laser source **131,** the servo motor **152a** is configured to move the position mirror, the angle mirror **153** is optically aligned with the position mirror to redirect the laser light beam therefrom to the single channel AOM **251,** and the servo motor **152b** is configured to move the angle mirror.

Furthermore, the beamsplitter **154** is positioned in the optical path between the angle mirror **153** and the single channel AOM **251** downstream from the angle mirror and is configured to split the sampled laser light beam **155** from the original laser light beam **141** from the laser source **131,** and direct this sampled laser light beam to the angle sensor **157.** Furthermore, the beamsplitter **156** is positioned in the optical path of the sampled laser light beam **155** between the beamsplitter **154** and the angle sensor **157** to split off another sampled laser light beam **158** which is directed through the lens **159** to image the angle mirror **153** to the position sensor **180.** The angle sensor **157** is configured to measure an angular displacement of the laser light beam from the laser source **131,** and the position sensor **180** is configured to measure a positional displacement of the laser light beam from the laser source. These measurements are provided to the servo controller **181,** which in turn controls or actuates the servo motors **152a, 152b** to correct the positional and angular displacements caused by drift or wandering of the laser light beam **141** at the laser source **131.**

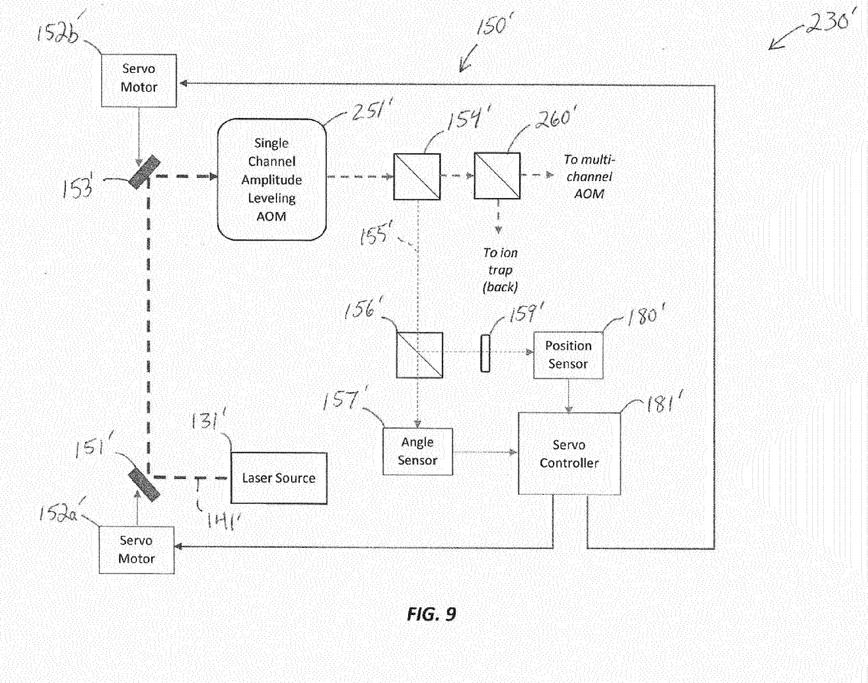

Referring additionally to FIG. 9, still another example implementation of the laser system **230'** is now described in which portions of the beam stabilizer **150'** are positioned both upstream and downstream from the AOM **251',** rather than all upstream as in the system **230.** In this example, the position mirror **151'** and angle mirror **153'** remain upstream from the AOM **251',** but the beamsplitters **154', 156',** angle sensor **157',** and position sensor **180'** are downstream of the AOM, meaning they are splitting/measuring the beam exiting the AOM, as opposed to the laser light beam **141'** from the laser source **131'** as in the system **230.** Nevertheless, the servo controller **181'** still causes the servo motors **152a', 152b'** to adjust the position mirror **151'** and angle mirror **153'** to perform beam correction to the laser light beam **141'** exiting the laser source **131'** as noted above.

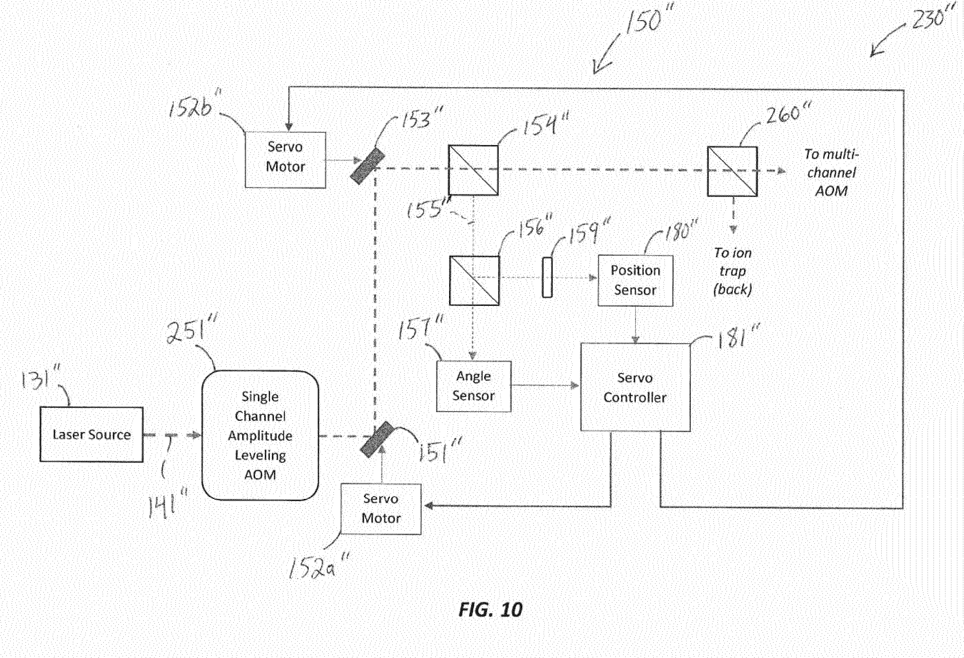

Turning now to FIG. 10, still another example implementation of the system **230''** with a beam stabilizer **150''** is now described. In this embodiment, the beam stabilizer **150''** is downstream from the AOM **251'',** including the position mirror **151''** and the angle mirror **153'' .** As such, the mirrors **151'', 153''** are directing, and the beamsplitters **154'', 155'',** angle sensor **157'',** and position sensor **180'',** are splitting/measuring, the beam exiting the AOM **251''.** Moreover, the corrections performed by the servo motor(s) **152''** and position mirror **151''** are to the beam exiting the AOM **251'',** not the laser light beam **141''** from the laser source **131''** as in the preceding two embodiments.

It should be noted that of the systems **130, 130', 130''** may advantageously be used to correct positional and/or angular displacement, and the choice of which one to implement may depend on the particular application, space constraints, and other considerations that will be appreciated by those skilled in the art. Moreover, various components of the laser system **230** shown in FIG. 2 are not reproduced in FIGS. 8-10 for clarity of illustration of the components of the beam stabilizers **150, 150'** and **150'',** but it will be understood that they would be present in an actual implementation.

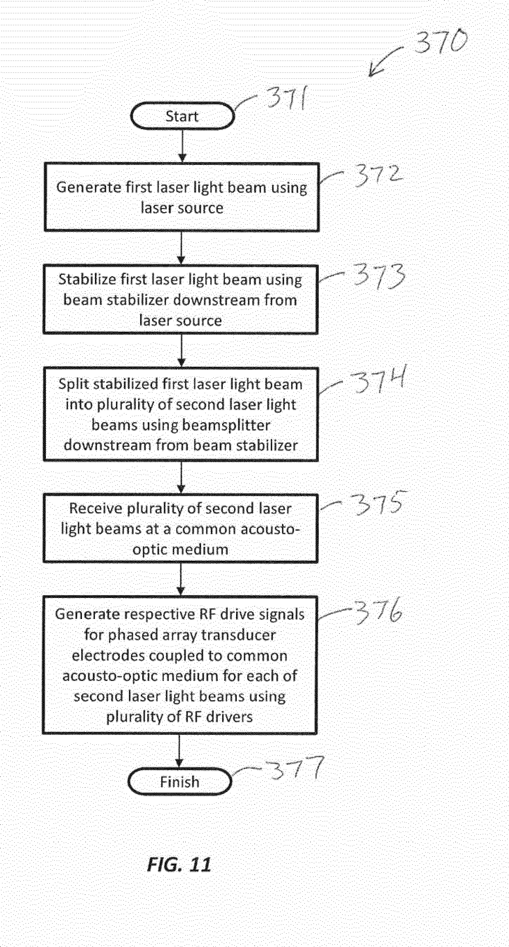

Related method aspects corresponding to the system **130** of FIG. 7 are now described with reference to the flow diagram **370** of FIG. 11. Beginning at Block **371,** the method illustratively includes generating a first laser light beam **141** using a laser source **131,** at Block **372,** and stabilizing the first laser light beam using a beam stabilizer **150** downstream from the laser source, at Block **373.** The method further illustratively includes splitting the stabilized first laser light **141** beam into a plurality of second laser light beams **143** using a beamsplitter **142** downstream from the beam stabilizer **150,** at Block **374,** and receiving the plurality of second laser light beams at a common acousto-optic medium **133,** at Block **375.** The method also illustratively includes generating respective RF drive signals for a plurality of phased array transducer electrodes **134** coupled to the common acousto-optic medium **133** for each of the second laser light beams **143** using a plurality of RF drivers **136,** at Block **376,** which illustratively concludes the method of FIG. 11 (Block **377).**

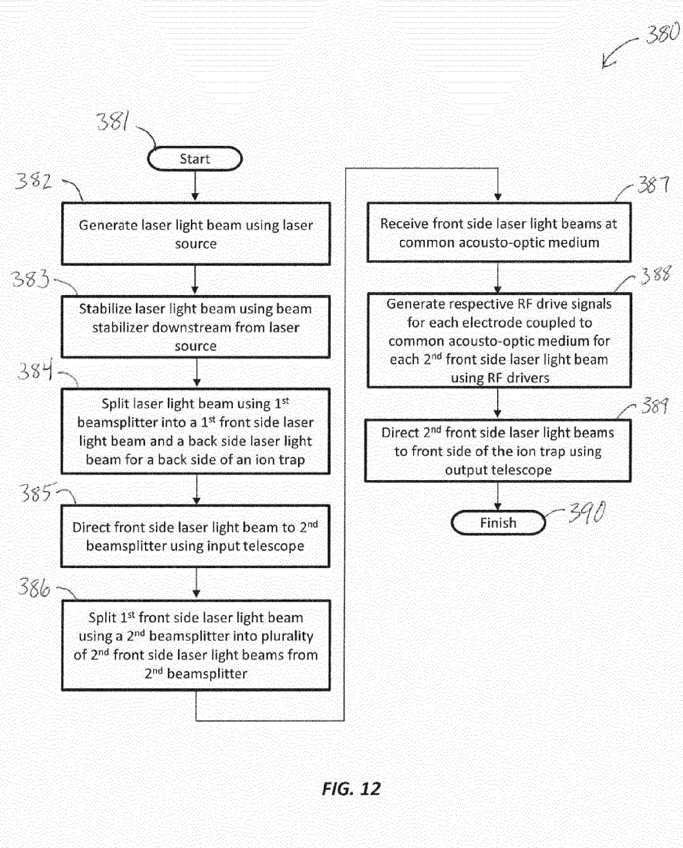

Additional method aspects corresponding to the systems **230, 230'** of FIGS. 8 and 9 are now described with reference to the flow diagram **380** of FIG. 12. The method begins (Block **380)** with generating a laser **141, 141'** light beam using a laser source **131, 131',** at Block **382,** stabilizing the laser light beam using a beam stabilizer **150, 150'** downstream from the laser source, and splitting the laser light beam using a first beamsplitter **260, 260'** into a first front side laser light beam **252** and a back side laser light beam **253** for a back side of an ion trap **238** (see FIG. 2), at Block **384.** The method further illustratively includes directing the front side laser light beam **252** to a second beamsplitter **142** using an input telescope **245,** at Block **385,** splitting the first front side laser light beam **252** using the second beamsplitter into a plurality of second front side laser light beams **246** from the second beamsplitter, at Block **386,** and receiving the plurality of front side laser light beams at a common acousto-optic medium **133** (Block **387).** Furthermore, the method also illustratively includes generating respective RF drive signals for each of a respective plurality of electrodes **134** coupled to the common acousto-optic medium for each of the second front side laser light beams **246** using a plurality of RF drivers **136,** at Block **388,** and directing the plurality of second front side laser light beams **254** output from the common acousto-optic medium **133** to a front side of the ion trap **238** using an output telescope **247,** at Block **389,** which illustratively concludes the method of FIG. 12 (Block **390).**

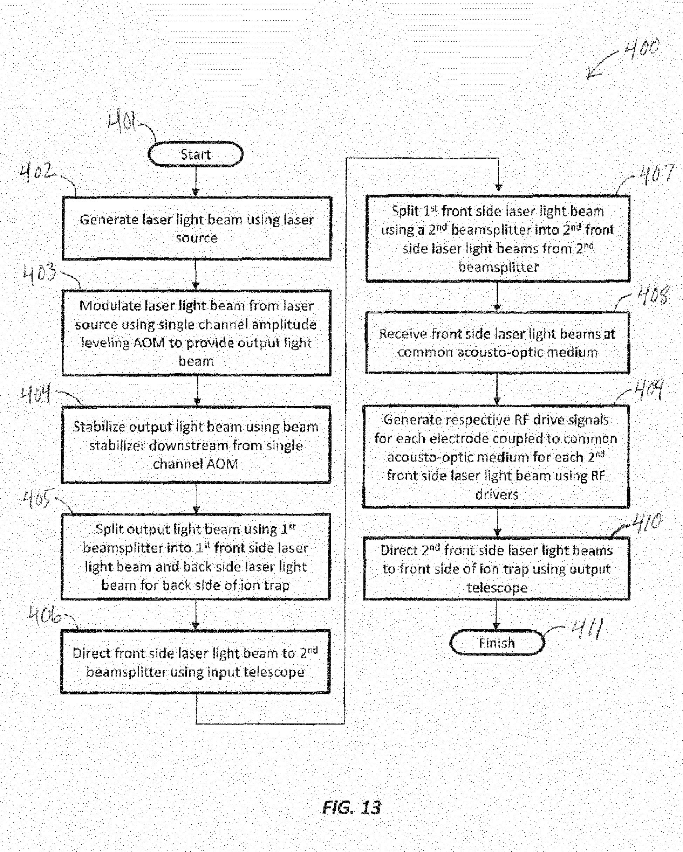

Turning now to the flow diagram **400** of FIG. 13, method aspects relating to the system **230''** are now described. Beginning at Block **381,** the method illustratively includes generating a laser light beam **141''** using a laser source **131'',** at Block **402,** modulating the laser light beam from the laser source using the single channel amplitude leveling AOM **251''** to provide an output light beam, at Block **403,** and stabilizing the output light beam using a beam stabilizer **150''** downstream from the single channel AOM, at Block **404.** The remaining steps illustrated at Blocks **406-411** are similar to those described above with reference to Blocks **385-390** of FIG. 12, and accordingly require no further discussion herein.

It should also be noted that in some embodiments of the system **130** a single channel amplitude leveling AOM **251** may also be incorporated between the laser source **131** and the multi-channel AOM **132,** if desired. In such cases, the beam stabilizer **150** may be configured as shown in FIGS. 8, 9, or 10, for example.

Further beam stabilization aspects and techniques for laser systems are discussed in co-pending application serial no. 15/900,936 filed February 21, 2018, US 2018 173027 as well as in co-pending application serial no. 15/918,184 filed March 12, 2018 US 2018 203325 entitled MULTI-CHANNEL PHASE-CAPABLE ACOUSTO-OPTIC MODULATOR (AOM) INCLUDING BEAM STABILIZER AND RELATED METHODS.

Many modifications and other embodiments will come to the mind of one skilled in the art having the benefit of the teachings presented in the foregoing descriptions and the associated drawings. Therefore, it is understood that the disclosure is not to be limited to the specific embodiments disclosed, and that modifications and embodiments are intended to be included within the scope of the appended claims.

## Claims

1. A laser system (130, 230, 230') comprising:
a laser source (131, 131', 231) configured to generate a laser light beam;
a beam stabilizer (150, 150', 150'') downstream from the laser source (131, 131', 231);
an ion trap (138, 238);
a first beamsplitter (260, 260') configured to split the laser light beam into a first front side laser light beam (252) and a back side laser light beam (253) for a back side of the ion trap (138, 238);
a multi-channel acousto-optic modulator (AOM) (132) comprising
a second beamsplitter (142) to split the first front side laser light beam (252) into a plurality of second front side laser light beams (246) from the second beamsplitter (142),
a common acousto-optic medium (133) configured to receive the plurality of front side laser light beams, and
a respective plurality of electrodes (134) coupled to the common acousto-optic medium (133) for each of the second front side laser light beams (246);
a plurality of radio frequency (RF) drivers (136) each configured to generate respective RF drive signals for each of the plurality of electrodes (134);
an input telescope (245) configured to direct the front side laser light beam to the second beamsplitter (142); and
an output telescope (247) configured to direct the plurality of second front side laser light beams (246) to a front side of the ion trap (138, 238).

2. The laser system (130, 230, 230') of Claim 1 wherein the beam stabilizer (150, 150', 150'') is configured to correct a positional displacement of the laser light beam.

3. The laser system (130, 230, 230') of Claim 1 wherein the beam stabilizer (150, 150', 150'') comprises:
a position mirror (151, 151') optically aligned with the laser light beam from the laser source (131, 131', 231);
a servo motor (152a, 152b, 152a', 152b', 152'') configured to move the position mirror (151, 151');
a position sensor (180, 180', 180'') configured to measure a positional displacement of the laser light beam; and
a servo controller (181, 181') coupled to the servo motor (152a, 152b, 152a', 152b', 152'') and configured to actuate the servo motor (152a, 152b, 152a', 152b', 152'') to stabilize the laser light beam based upon the position sensor (180, 180', 180").

4. The laser system (130, 230, 230') of Claim 1 further comprising a single channel amplitude leveling acousto-optic modulator (AOM) (251, 251'') coupled between the laser source (131, 131', 231) and the first beamsplitter (260, 260'); and wherein the beam stabilizer (150, 150', 150'') comprises:
a position mirror (151, 151') optically aligned with an output light beam from the single channel amplitude leveling AOM (251, 251'');
a servo motor (152a, 152b, 152a', 152b', 152'') configured to move the position mirror (151, 151');
a position sensor (180, 180', 180'') configured to measure a positional displacement of the output light beam; and
a servo controller (181, 181') coupled to the servo motor (152a, 152b, 152a', 152b', 152'') and configured to actuate the servo motor (152a, 152b, 152a', 152b', 152'') to stabilize the output light beam based upon the position sensor (180, 180', 180'').

5. The laser system (130, 230, 230') of Claim 1 wherein the beam stabilizer (150, 150', 150'') is configured to correct an angular displacement of the laser light beam.

6. The laser system (130, 230, 230') of Claim 1 wherein the beam stabilizer (150, 150', 150'') comprises:
an angle mirror (153, 153', 153'') optically aligned with the laser light beam from the laser source (131, 131', 231) ;
a servo motor (152a, 152b, 152a', 152b', 152'') configured to move the angle mirror (153, 153', 153'');
an angle sensor (157, 157', 157'') configured to measure an angular displacement of the laser light beam; and
a servo controller (181, 181') coupled to the servo motor (152a, 152b, 152a', 152b', 152'') and configured to actuate the servo motor (152a, 152b, 152a', 152b', 152'') to stabilize the laser light beam based upon the angle sensor (157, 157', 157'').

7. The laser system (130, 230, 230') of Claim 1 further comprising a single channel amplitude leveling acousto-optic modulator (AOM) (251, 251'') coupled between the laser source (131, 131', 231) and the first beamsplitter (260, 260'); and wherein the beam stabilizer (150, 150', 150'') comprises:
an angle mirror (153, 153', 153'') optically aligned with an output light beam from the single channel amplitude leveling AOM (251, 251'');
a servo motor (152a, 152b, 152a', 152b', 152'') configured to move the angle mirror (153, 153', 153'');
an angle sensor (157, 157', 157'') configured to measure an angular displacement of the output light beam; and
a servo controller (181, 181') coupled to the servo motor (152a, 152b, 152a', 152b', 152'') and configured to actuate the servo motor (152a, 152b, 152a', 152b', 152'') to stabilize the output light beam based upon the angle sensor (157, 157', 157'').

8. A method (70, 80, 370, 380, 400) comprising:
generating (72, 82, 372, 382, 402) a laser light beam using a laser source;
stabilizing (373, 383, 404) the laser light beam using a beam stabilizer downstream from the laser source;
splitting (73, 83, 374, 384, 405) the laser light beam using a first beamsplitter into a first front side laser light beam and a back side laser light beam for a back side of an ion trap;
directing (84, 385, 406) the front side laser light beam to a second beamsplitter using an input telescope;
splitting (85, 386, 407) the first front side laser light beam using the second beamsplitter into a plurality of second front side laser light beams from the second beamsplitter;
receiving (375, 387, 408) the plurality of front side laser light beams at a common acousto-optic medium;
generating (74, 87, 376, 388, 409) respective radio frequency (RF) drive signals for each of a respective plurality of electrodes coupled to the common acousto-optic medium for each of the second front side laser light beams using a plurality of RF drivers; and
directing (86, 389, 410) the plurality of second front side laser light beams to a front side of the ion trap using an output telescope.

9. The method of Claim 8 wherein the beam stabilizer is configured to correct a positional displacement of the laser light beam.

10. The method of Claim 8 wherein the beam stabilizer is configured to correct an angular displacement of the laser light beam.

## Patentansprüche

1. Lasersystem (130, 230, 230'), umfassend:
eine Laserquelle (131, 131', 231), die eingerichtet ist, um einen Laserlichtstrahl zu erzeugen;
einen Strahlstabilisator (150, 150', 150") stromabwärts der Laserquelle (131, 131', 231);
eine Ionenfalle (138, 238);
einen ersten Strahlteiler (260, 260'), der eingerichtet ist, um den Laserlichtstrahl in einen ersten Vorderseitenlasersichtstrahl (252) und einen Rückseitenlasersichtstrahl (253) für eine Rückseite der Ionenfalle (138, 238) aufzuteilen;
einen mehrkanaligen akustooptischen Modulator, AOM (132), umfassend
einen zweiten Strahlteiler (142) zum Aufteilen des ersten Vorderseitenlasersichtstrahls (252) in eine Mehrzahl von zweiten Vorderseitenlaserlichtstrahlen (246) vom zweiten Strahlteiler (142),
ein gemeinsames akustooptisches Medium (133), das eingerichtet ist, um die Mehrzahl von Vorderseitenlaserlichtstrahlen zu empfangen, und
eine entsprechende Mehrzahl von Elektroden (134), die mit dem gemeinsamen akustooptischen Medium (133) gekoppelt sind, für jeden der zweiten Vorderseitenlaserlichtstrahlen (246);
eine Mehrzahl von Hochfrequenz-, RF, Treibern (136), die jeweils eingerichtet sind, um entsprechende RF-Ansteuersignale für jede der Mehrzahl von Elektroden (134) zu erzeugen;
ein Eingangsteleskop (245), das eingerichtet ist, um den Vorderseitenlasersichtstrahl auf den zweiten Strahlteiler (142) zu lenken; und
ein Ausgangsteleskop (247), das eingerichtet ist, um die Mehrzahl von zweiten Vorderseitenlaserlichtstrahlen (246) auf eine Vorderseite der Ionenfalle (138, 238) zu lenken.

2. Lasersystem (130, 230, 230') nach Anspruch 1, wobei der Strahlstabilisator (150, 150', 150") eingerichtet ist, um eine Positionsverschiebung des Laserlichtstrahls zu korrigieren.

3. Lasersystem (130, 230, 230') nach Anspruch 1, wobei der Strahlstabilisator (150, 150', 150") umfasst:
einen Positionsspiegel (151, 151'), der optisch mit dem Laserlichtstrahl von der Laserquelle (131, 131', 231) ausgerichtet ist;
einen Servomotor (152a, 152b, 152a', 152b', 152"), der eingerichtet ist, um den Positionsspiegel (151, 151') zu bewegen;
einen Positionssensor (180, 180', 180"), der eingerichtet ist, um eine Positionsverschiebung des Laserlichtstrahls zu messen; und
eine Servosteuerung (181, 181'), die mit dem Servomotor (152a, 152b, 152a', 152b', 152") gekoppelt ist und zum Betätigen des Servomotors (152a, 152b, 152a', 152b', 152") eingerichtet ist, um den Laserlichtstrahl basierend auf dem Positionssensor (180, 180', 180") zu stabilisieren.

4. Lasersystem (130, 230, 230') nach Anspruch 1, ferner umfassend einen akustooptischen Modulator, AOM, zur Einkanal-Amplitudennivellierung (251, 251"), der zwischen der Laserquelle (131, 131', 231) und dem ersten Strahlteiler (260, 260') gekoppelt ist; und
wobei der Strahlstabilisator (150, 150', 150") umfasst:
einen Positionsspiegel (151, 151'), der optisch mit einem Ausgangslichtstrahl vom AOM zur Einkanal-Amplitudennivellierung (251, 251") ausgerichtet ist;
einen Servomotor (152a, 152b, 152a', 152b', 152"), der eingerichtet ist, um den Positionsspiegel (151, 151') zu bewegen;
einen Positionssensor (180, 180', 180"), der eingerichtet ist, um eine Positionsverschiebung des Ausgangslichtstrahls zu messen; und
eine Servosteuerung (181, 181'), die mit dem Servomotor (152a, 152b, 152a', 152b', 152") gekoppelt ist und zum Betätigen des Servomotors (152a, 152b, 152a', 152b', 152") eingerichtet ist, um den Ausgangslichtstrahl basierend auf dem Positionssensor (180, 180', 180") zu stabilisieren.

5. Lasersystem (130, 230, 230') nach Anspruch 1, wobei der Strahlstabilisator (150, 150', 150") eingerichtet ist, um eine Winkelverschiebung des Laserlichtstrahls zu korrigieren.

6. Lasersystem (130, 230, 230') nach Anspruch 1, wobei der Strahlstabilisator (150, 150', 150") umfasst:
einen Winkelspiegel (153, 153', 153"), der optisch mit dem Laserlichtstrahl von der Laserquelle (131, 131', 231) ausgerichtet ist;
einen Servomotor (152a, 152b, 152a', 152b', 152"), der eingerichtet ist, um den Winkelspiegel (153, 153', 153") zu bewegen;
einen Winkelsensor (157, 157', 157"), der eingerichtet ist, um eine Winkelverschiebung des Laserlichtstrahls zu messen; und
eine Servosteuerung (181, 181'), die mit dem Servomotor (152a, 152b, 152a', 152b', 152") gekoppelt ist und zum Betätigen des Servomotors (152a, 152b, 152a', 152b', 152") eingerichtet ist, um den Laserlichtstrahl basierend auf dem Winkelsensor (157, 157', 157") zu stabilisieren.

7. Lasersystem (130, 230, 230') nach Anspruch 1, ferner umfassend einen akustooptischen Modulator, AOM, zur Einkanal-Amplitudennivellierung (251, 251"), der zwischen der Laserquelle (131, 131', 231) und dem ersten Strahlteiler (260, 260') gekoppelt ist; und
wobei der Strahlstabilisator (150, 150', 150") umfasst:
einen Winkelspiegel (153, 153', 153"), der optisch mit einem Ausgangslichtstrahl von dem AOM zur Einkanal-Amplitudennivellierung (251, 251') ausgerichtet ist;
einen Servomotor (152a, 152b, 152a', 152b', 152"), der eingerichtet ist, um den Winkelspiegel (153, 153', 153") zu bewegen;
einen Winkelsensor (157, 157', 157"), der eingerichtet ist, um eine Winkelverschiebung des Ausgangslichtstrahls zu messen; und
eine Servosteuerung (181, 181'), die mit dem Servomotor (152a, 152b, 152a', 152b', 152") gekoppelt ist und zum Betätigen des Servomotors (152a, 152b, 152a', 152b', 152") eingerichtet ist, um den Ausgangslichtstrahl basierend auf dem Winkelsensor (157, 157', 157") zu stabilisieren.

8. Verfahren (70, 80, 370, 380, 400), umfassend:
Erzeugen (72, 82, 372, 382, 402) eines Laserlichtstrahls unter Verwendung einer Laserquelle;
Stabilisieren (373, 383, 404) des Laserlichtstrahls unter Verwendung eines Strahlstabilisators stromabwärts der Laserquelle;
Aufteilen (73, 83, 374, 384, 405) des Laserlichtstrahls unter Verwendung eines ersten Strahlteilers in einen ersten Vorderseitenlasersichtstrahl und einen Rückseitenlasersichtstrahl für eine Rückseite einer Ionenfalle;
Lenken (84, 385, 406) des Vorderseitenlasersichtstrahls auf einen zweiten Strahlteiler unter Verwendung eines Eingangsteleskops;
Aufteilen (85, 386, 407) des ersten Vorderseitenlasersichtstrahls unter Verwendung des zweiten Strahlteilers in eine Mehrzahl zweiter Vorderseitenlaserlichtstrahlen vom zweiten Strahlteiler;
Empfangen (375, 387, 408) der Mehrzahl von Vorderseitenlaserlichtstrahlen bei einem gemeinsamen akustooptischen Medium;
Erzeugen (74, 87, 376, 388, 409) entsprechender Hochfrequenz-, RF, Antriebssignale für jede einer Mehrzahl von Elektroden, die mit dem gemeinsamen akustooptischen Medium gekoppelt sind, für jeden der zweiten Vorderseitenlaserlichtstrahlen unter Verwendung einer Mehrzahl von RF-Treibern; und
Lenken (86, 389, 410) der Mehrzahl zweiter Vorderseitenlaserlichtstrahlen auf eine Vorderseite der Ionenfalle unter Verwendung eines Ausgangsteleskops.

9. Verfahren nach Anspruch 8, wobei der Strahlstabilisator eingerichtet ist, um eine Positionsverschiebung des Laserlichtstrahls zu korrigieren.

10. Verfahren nach Anspruch 8, wobei der Strahlstabilisator eingerichtet ist, um eine Winkelverschiebung des Laserlichtstrahls zu korrigieren.

## Revendications

1. Système laser (130, 230, 230') comprenant :
une source (131, 131', 231) de laser configurée pour générer un faisceau de lumière laser ;
un stabilisateur (150, 150', 150") de faisceau en aval de la source (131, 131', 231) de laser ;
un piège (138, 238) à ions ;
un premier séparateur (260, 260') de faisceau configuré pour séparer le faisceau de lumière laser en un premier faisceau de lumière laser (252) de côté avant et un faisceau de lumière laser (253) de côté arrière pour un côté arrière du piège (138, 238) à ions ;
un modulateur acousto-optique (AOM) multicanaux (132) comprenant
un deuxième séparateur (142) de faisceau pour séparer le premier faisceau de lumière laser (252) de côté avant en une pluralité de deuxièmes faisceaux de lumière laser (246) de côté avant à partir du deuxième séparateur (142) de faisceau,
un milieu acousto-optique commun (133) configuré pour recevoir la pluralité de faisceaux de lumière laser de côté avant, et
une pluralité respective d'électrodes (134) couplées au milieu acousto-optique commun (133) pour chacun des deuxièmes faisceaux de lumière laser (246) de côté avant ;
une pluralité de pilotes de radiofréquence (RF) (136), chacun configuré pour générer des signaux de pilotage RF respectifs pour chacune de la pluralité d'électrodes (134) ;
un télescope d'entrée (245) configuré pour orienter le faisceau de lumière laser de côté avant sur le deuxième séparateur (142) de faisceau ; et
un télescope de sortie (247) configuré pour orienter la pluralité de deuxièmes faisceaux de lumière laser (246) de côté avant sur un côté avant du piège (138, 238) à ions.

2. Système laser (130, 230, 230') selon la revendication 1, dans lequel le stabilisateur (150, 150', 150") de faisceau est configuré pour corriger un déplacement positionnel du faisceau de lumière laser.

3. Système laser (130, 230, 230') selon la revendication 1, dans lequel le stabilisateur (150, 150', 150") de faisceau comprend :
un miroir (151, 151') de position optiquement aligné avec le faisceau de lumière laser provenant de la source (131, 131', 231) de laser ;
un servomoteur (152a, 152b, 152a', 152b', 152") configuré pour déplacer le miroir (151, 151') de position ;
un capteur (180, 180', 180") de position configuré pour mesurer un déplacement positionnel du faisceau de lumière laser ; et
un servocontrôleur (181, 181') couplé au servomoteur (152a, 152b, 152a', 152b', 152") et configuré pour actionner le servomoteur (152a, 152b, 152a', 152b', 152") pour stabiliser le faisceau de lumière laser sur la base du capteur (180, 180', 180") de position.

4. Système laser (130, 230, 230') selon la revendication 1, comprenant en outre un modulateur acousto-optique (AOM) à nivellement d'amplitude monocanal (251, 251") couplé entre la source (131, 131', 231) de laser et le premier séparateur (260, 260') de faisceau ;
et dans lequel le stabilisateur (150, 150', 150") de faisceau comprend :
un miroir (151, 151') de position optiquement aligné avec un faisceau de lumière de sortie provenant de l'AOM à nivellement d'amplitude monocanal (251, 251") ;
un servomoteur (152a, 152b, 152a', 152b', 152") configuré pour déplacer le miroir (151, 151') de position ;
un capteur (180, 180', 180") de position configuré pour mesurer un déplacement positionnel du faisceau de lumière de sortie ; et
un servocontrôleur (181, 181') couplé au servomoteur (152a, 152b, 152a', 152b', 152") et configuré pour actionner le servomoteur (152a, 152b, 152a', 152b', 152") pour stabiliser le faisceau de lumière de sortie sur la base du capteur (180, 180', 180") de position.

5. Système laser (130, 230, 230') selon la revendication 1, dans lequel le stabilisateur (150, 150', 150") de faisceau est configuré pour corriger un déplacement angulaire du faisceau de lumière laser.

6. Système laser (130, 230, 230') selon la revendication 1, dans lequel le stabilisateur (150, 150', 150") de faisceau comprend :
un miroir (153, 153', 153") d'angle optiquement aligné avec le faisceau de lumière laser provenant de la source (131, 131', 231) de laser ;
un servomoteur (152a, 152b, 152a', 152b', 152") configuré pour déplacer le miroir (153, 153', 153") d'angle ;
un capteur (157, 157', 157") d'angle configuré pour mesurer un déplacement angulaire du faisceau de lumière laser ; et
un servocontrôleur (181, 181') couplé au servomoteur (152a, 152b, 152a', 152b', 152") et configuré pour actionner le servomoteur (152a, 152b, 152a', 152b', 152") pour stabiliser le faisceau de lumière laser sur la base du capteur (157, 157', 157") d'angle.

7. Système laser (130, 230, 230') selon la revendication 1, comprenant en outre un modulateur acousto-optique (AOM) à nivellement d'amplitude monocanal (251, 251") couplé entre la source (131, 131', 231) de laser et le premier séparateur (260, 260') de faisceau ;
et dans lequel le stabilisateur (150, 150', 150") de faisceau comprend :
un miroir (153, 153', 153") d'angle optiquement aligné avec un faisceau de lumière de sortie provenant de l'AOM à nivellement d'amplitude monocanal (251, 251") ;
un servomoteur (152a, 152b, 152a', 152b', 152") configuré pour déplacer le miroir (153, 153', 153") d'angle ;
un capteur (157, 157', 157") d'angle configuré pour mesurer un déplacement angulaire du faisceau de lumière de sortie ; et
un servocontrôleur (181, 181') couplé au servomoteur (152a, 152b, 152a', 152b', 152") et configuré pour actionner le servomoteur (152a, 152b, 152a', 152b', 152") pour stabiliser le faisceau de lumière de sortie sur la base du capteur (157, 157', 157") d'angle.

8. Procédé (70, 80, 370, 380, 400) comprenant :
la génération (72, 82, 372, 382, 402) d'un faisceau de lumière laser en utilisant une source de laser ;
la stabilisation (373, 383, 404) du faisceau de lumière laser en utilisant un stabilisateur de faisceau en aval de la source de laser ;
la séparation (73, 83, 374, 384, 405) du faisceau de lumière laser en utilisant un premier séparateur de faisceau en un premier faisceau de lumière laser de côté avant et un faisceau de lumière laser de côté arrière pour un côté arrière d'un piège à ions ;
l'orientation (84, 385, 406) du faisceau de lumière laser de côté avant sur un deuxième séparateur de faisceau en utilisant un télescope d'entrée ;
la séparation (85, 386, 407) du premier faisceau de lumière laser de côté avant en utilisant le deuxième séparateur de faisceau en une pluralité de deuxièmes faisceaux de lumière laser de côté avant à partir du deuxième séparateur de faisceau ;
la réception (375, 387, 408) de la pluralité de faisceaux de lumière laser de côté avant au niveau d'un milieu acousto-optique commun ;
la génération (74, 87, 376, 388, 409) de signaux de pilotage radiofréquence (RF) respectifs pour chacune d'une pluralité respective d'électrodes couplées au milieu acousto-optique commun pour chacun des deuxièmes faisceaux de lumière laser de côté avant en utilisant une pluralité de pilotes RF ; et
l'orientation (86, 389, 410) de la pluralité de deuxièmes faisceaux de lumière laser de côté avant sur un côté avant du piège à ions en utilisant un télescope de sortie.

9. Procédé selon la revendication 8, dans lequel le stabilisateur de faisceau est configuré pour corriger un déplacement positionnel du faisceau de lumière laser.

10. Procédé selon la revendication 8, dans lequel le stabilisateur de faisceau est configuré pour corriger un déplacement angulaire du faisceau de lumière laser.
